# EUROPEAN PATENT APPLICATION

(11) **EP 4 742 493 A1**
(43) Date of publication of application: **13.05.2026**
(21) Application number: 25210939.2
(22) Date of filing: 24.10.2025
(51) Int. Cl.: H02J 7/40, H01M 10/42, H01M 10/48, H02J 7/50, H02J 7/60, H02J 7/80, H01M 50/574

(54) **BATTERY PROTECTION SYSTEM AND BATTERY PROTECTION METHOD**

(30) Priority: 06.11.2024 CN 202411582212
(71) Applicant: Solax Power Network Technology (Zhejiang) Co., Ltd., Hangzhou, Zhejiang 311500 (CN)
(72) Inventor: YANG, Xingxing, Hangzhou, 311500 (CN); SONG, Su, Hangzhou, 311500 (CN); LI, Xinfu, Hangzhou, 311500 (CN)
(74) Representative: Murgitroyd & Company

(57) **Abstract**

The present application relates to the field of energy storage technology, and in particular, to a battery protection system and a battery protection method. The battery protection method includes: acquiring a cell data; generating a first protection instruction according to the cell data when the cell data satisfies a first condition; controlling the protection switch in the battery protection system to be disconnected in response to the first protection instruction; acquiring a first hardware protection signal when the cell data satisfies a second condition; controlling the protection switch to be disconnected according to the first hardware protection signal. Through a hardware protection and a software protection, a dual protection of a battery pack is achieved, and a safety and reliability of an operation of the battery pack is improved.

## Description

### TECHNICAL FIELD

The present invention relates to the field of energy storage technology, and in particular, to a battery protection system and a battery protection method.

### BACKGROUND

As an apparatus for storing electrical energy, a battery pack is internally composed of multiple battery cells (such as lithium-ion batteries, lead-acid batteries, and the like.) through specific connection manners and structures, and has an ability to store and release electrical energy. This ability to store and release electrical energy enables the battery pack to be applied in various fields such as power systems, portable electronic devices, electric vehicles, and renewable energy generation.

However, under conditions such as overcharging (abbreviated as overcharge), over-discharging (abbreviated as overdischarge), excessively high or low battery cell temperatures (abbreviated as overtemperature), or charging/discharging at high-temperature or low-temperature, a lifespan and safety of the battery will be severely affected and even prone to safety issues such as fire or explosion. Therefore, battery protection is critical to ensure the normal, safe, and stable operation of the entire battery pack.

### SUMMARY

In view of this, the present invention provides a battery protection system and battery protection method to solve the problem that the lifespan and safety of the battery will be severely affected and even prone to fire or explosion in situations such as battery pack in overcharging, over-discharging, or over-temperature, charging/discharging at high-temperature or low-temperature.

A first aspect of the embodiments of the present invention provides a battery protection system, the battery protection system includes a control device and battery back(s), where the battery pack includes a cell sampling chip, a first software protection module and a first hardware protection module, the first software protection module and the first hardware protection module are both electrically connected to the cell sampling chip, the control device includes a protection switch, a second software protection module and a second hardware protection module, the second software protection module and the second hardware protection module are both electrically connected to the protection switch, the first software protection module and the second software protection module are communicatively connected, and the first hardware protection module and the second hardware protection module are electrically connected, where the cell sampling chip acquires cell data, and sends the cell data to the first software protection module and the first hardware protection module; when the cell data satisfies a first condition, the first software protection module generates a first protection instruction according to the cell data and sends the first protection instruction to the second software protection module; the second software protection module controls the protection switch to be disconnected in response to the first protection instruction; when the cell data satisfies a second condition, the first hardware protection module acquires a first hardware protection signal, and transmits the first hardware protection signal to the second hardware protection module; and the second hardware protection module controls the protection switch to be disconnected according to the first hardware protection signal.

In some embodiments, the first software protection module and the first hardware protection module are electrically connected; the first hardware protection module transmits the first hardware protection signal to the first software protection module; and the first software protection module generates the first protection instruction according to the first hardware protection signal.

In some embodiments, when it is determined that the cell data satisfies the second condition, the first software protection module generates a second hardware protection signal according to the cell data, and sends the second hardware protection signal to the first hardware protection module.

In some embodiments, the first hardware protection module includes a first drive module, the first software protection module and the first drive module are electrically connected; the first drive module determines a target hardware protection signal according to the first hardware protection signal and the second hardware protection signal, and sends the target hardware protection signal to the second hardware protection module; and the second hardware protection module controls the protection switch to be disconnected according to the target hardware protection signal.

In some embodiments, the second software protection module and the second hardware protection module are electrically connected; the second hardware protection module sends the first hardware protection signal to the second software protection module; and the second software protection module receives the first hardware protection signal and controls the protection switch to be disconnected according to the first hardware protection signal.

In some embodiments, the control device further includes a second drive module, an output end of the second software protection module and an output end of the second hardware protection module are both electrically connected to an input end of the second drive module, and an output end of the second drive module is electrically connected to the protection switch to control the protection switch to be disconnected.

In some embodiments, if it is determined that the cell data is within a first threshold range, the first software protection module determines that the cell data satisfies the first condition.

In some embodiments, if it is determined that the cell data is within a second threshold range, the first software protection module determines that the cell data satisfies the second condition.

In some embodiments, the first software protection module sends the cell data to the second software protection module; and the second software protection module receives the cell data, and when it is determined that the cell data satisfies the first condition, generates a second protection command and controls the protection switch to be disconnected according to the second protection command.

The second aspect of the embodiments of the present invention provides a battery protection method, the battery protection method uses the battery protection system according to the battery pack in the battery protection system mentioned above, and the battery protection method includes: acquiring a cell data; generating a first protection instruction according to the cell data when the cell data satisfies a first condition; controlling the protection switch in the battery protection system to be disconnected in response to the first protection instruction; acquiring a first hardware protection signal when the cell data satisfies a second condition; and controlling the protection switch to be disconnected according to the first hardware protection signal.

In some embodiments, the battery protection method further includes: in a case that the cell data is within a first threshold range, determining that the cell data satisfies the first condition.

In some embodiments, the battery protection method further includes: in a case that the cell data is within a second threshold range, determining that the cell data satisfies the second condition.

In some embodiments, the first software protection module and the first hardware protection module are electrically connected, and the battery protection method includes: transmitting, by the first hardware protection module, the first hardware protection signal to the first software protection module; and generating, by the first software protection module based on the first hardware protection signal, the first protection instruction.

In some embodiments, battery protection method further includes: in a case that the cell data satisfies the second condition, generating, by the first software protection module based on the cell data, a second hardware protection signal; transmitting, by the first software protection module, the second hardware protection signal to the first hardware protection module.

In some embodiments, the first hardware protection module comprises a first drive module, the first software protection module and the first drive module are electrically connected, the battery protection method includes: determining, by the first drive module based on the first hardware protection signal and the second hardware protection signal, a target hardware protection signal; transmitting, by the first drive module, the target hardware protection signal to the second hardware protection module; and controlling, by the second hardware protection module based on the target hardware protection signal, the protection switch to be disconnected.

In a battery protection system provided by the embodiments of the present invention, the battery protection system includes a control device and battery back(s), the battery pack includes a cell sampling chip, a first software protection module, and a first hardware protection module, the control device includes a protection switch, a second software protection module, and a second hardware protection module. Where, the first software protection module and the second software protection module are communicatively connected, the first hardware protection module and the second hardware protection module are electrically connected. In a process of implementing battery protection, the cell sampling chip acquires cell data and sends the cell data to first software protection module and first hardware protection module. When the cell data satisfies a first condition, the first software protection module generates a first protection instruction according to the cell data and sends the first protection instruction to the second software protection module. The second software protection module controls the protection switch to be disconnected in response to the first protection instruction, thereby protecting the battery pack through a software protection. Considering that the first software protection module or the second software protection module may cause a software protection to fail due to a fault, affecting the safety and reliability of the battery pack. Therefore, the battery protection system provided by the embodiments of the present invention adds a method of hardware protection method on a basis of the software protection. In a case that the cell data satisfies the second condition, the first hardware protection module acquires the first hardware protection signal and sends the first hardware protection signal to the second hardware protection module. The second hardware protection module controls the protection switch to be disconnected according to the first hardware protection signal. Through hardware protection and software protection, a dual protection for the battery pack is achieved, the safety and reliability of an operation of the battery pack is improved.

### BRIEF DESCRIPTION OF THE DRAWINGS

In order to more clearly illustrate the technical solutions of the embodiments of the present invention, the following will briefly introduce the drawings needed in the description of the embodiments of the present invention. Obviously, the drawings in the following description are only some embodiments of the present invention. For those of ordinary skill in the art, other drawings can be obtained from these drawings without creative effort.
Fig. 1 is a schematic diagram of a system architecture of a battery protection system according to an embodiment of the present invention.
Fig. 2 is a schematic diagram of a system architecture of a battery protection system according to another embodiment of the present invention.
Fig. 3 is a schematic diagram of a system architecture of a battery protection system according to still another embodiment of the present invention.
Fig. 4 is a schematic diagram of a system architecture of a battery protection system according to yet another embodiment of the present invention.
Fig. 5 is a schematic diagram of a system architecture of battery protection system according to embodiments of the present invention.
Fig. 6 is a flowchart of an implementation of a battery protection method according to embodiments of the present invention.

### DETAILED DESCRIPTION OF THE EMBODIMENTS

The following will clearly and completely describe technical solutions in embodiments of the present invention with reference to the drawings in the embodiments of the present invention. Obviously, the described embodiments are part of the embodiments of the present invention, not all of them. Based on the embodiments of the present invention, all other embodiments obtained by those of ordinary skill in the art without creative effort fall within the scope of protection of the present invention.

Hereinafter, the terms 'first' and 'second' are used for descriptive purposes only and cannot be understood as indicating or implying relative importance or implicitly indicating the number of technical features. Thus, features defined as 'first' or 'second' may explicitly or implicitly include one or more of these features. In description of the embodiments of the present invention, terms such as 'exemplary' or 'for example' are used to indicate examples, illustrations, or explanations. Any embodiment or design scheme described as 'exemplary' or 'for example' in the embodiments of the present invention should not be interpreted as being more preferred or advantageous than other embodiments or design schemes. Rather, the use of terms such as 'exemplary' or 'for example' is intended to present related concepts in a specific manner.

Unless otherwise defined, all technical and scientific terms used herein have same meaning as commonly understood by those skilled in the technical field of the present invention. The terminology used in the specification of the present invention is for the purpose of describing specific embodiments only and is not intended to limit the present invention. It should be understood that in the present invention, unless otherwise stated, '/' means 'or'. For example, A/B may represent A or B. The 'and/or' in the present invention is merely a description of a relationship between associated objects, indicating that there may be three types of relationships. For example, A and/or B may represent three cases: A alone, both A and B, or B alone. 'At least one' refers to one or more. 'a plurality of refers to two or more. For example, at least one of a, b, or c may represent seven cases: a, b, c, a and b, a and c, b and c, or a, b, and c.

Battery protection is critical to ensure a normal, safe, and stable operation of a battery. In related technologies, the battery management system (BMS) may monitor parameters such as voltage, charging current, discharging current, and temperature of a battery pack. When situations like overcharging, over-discharging, or over-temperature occur, the BMS may control the charging or discharging process of the battery pack to ensure the normal and stable operation of an entire battery pack. However, if the BMS malfunctions and control fails, a protection function for the battery pack will be lost.

To solve above problems, embodiments of the present invention provides a battery protection system, which achieves dual protection for the battery pack through hardware protection and software protection. The hardware protection and the software protection are independent of each other and do not affect each other. When the software protection fails, the hardware protection may control a protection switch to be disconnected, thereby protecting the battery pack. Or when the hardware protection fails, the software protection may control the protection switch to be disconnected, thereby protecting the battery pack, and improving the safety and reliability of the operation of the battery pack.

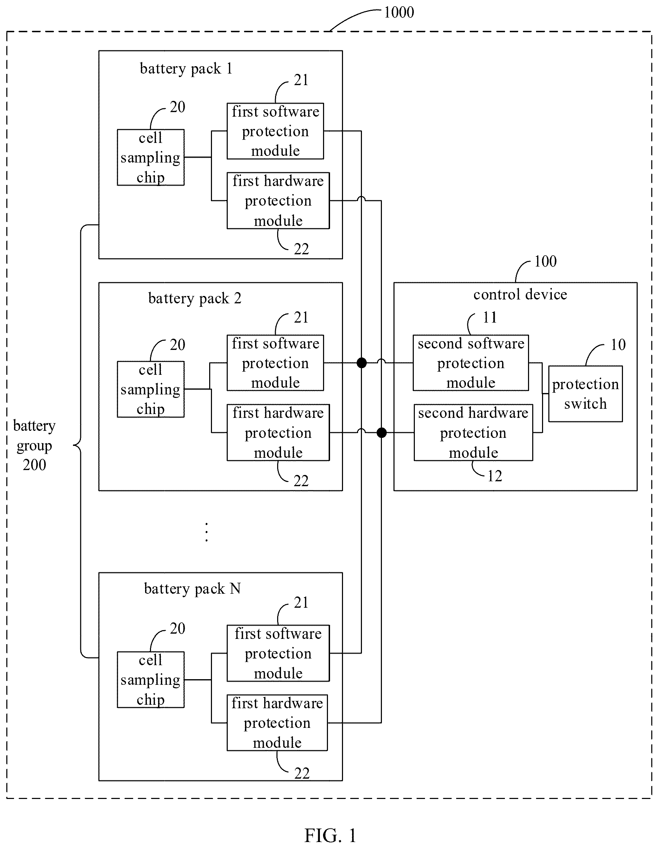

Please refer to Fig.1, which is a schematic diagram of a system architecture of a battery protection system according to an embodiment of the present invention. As shown in Fig. 1, The battery protection system 1000 includes a control device 100 and a battery group 200, and the battery group 200 includes a plurality of battery packs 1 to N, where N is an integer greater than 1. Each battery pack in the battery packs 1 to N includes a cell sampling chip 20, a first software protection module 21, and a first hardware protection module 22, and both the first software protection module 21 and the first hardware protection module 22 are electrically connected to the cell sampling chip 20. The control device includes a protection switch 10, a second software protection module 11, and a second hardware protection module 12, and both the second software protection module 11 and the second hardware protection module 12 are electrically connected to the protection switch 10. The first software protection module 21 is communicatively connected to the second software protection module 11, and the first hardware protection module 22 is electrically connected to the second hardware protection module 12.

In some embodiments, an electrical connection manner may include connections based on Serial Peripheral Interface (SPI) or Inter-Integrated Circuit (I2C). The communication connection may include a wired communication connection and a wireless communication connection.

In some embodiments, the first software protection module 21 of each battery pack in the battery packs 1 to N may be connected to a communication bus, and communicatively connected with the second software protection module 11 through the communication bus. The first hardware protection module 22 of each battery pack in the battery packs 1 to N may be connected to a hardware protection bus, and be electrically connected to the second hardware protection module 12 through the hardware protection bus.

In some embodiments, the communication bus may be a serial communication bus, such as SPI communication bus, I2C communication bus, and the like. The hardware protection bus can be an I2C bus, SPI bus, and the like. The embodiments of the present invention do not limit types of the communication bus and the hardware protection bus.

In some embodiments, the cell sampling chip 20 may refer to an independent cell sampling chip 20 or a collection of multiple cell sampling chips.

In some embodiments, a composition, configuration, and other aspects of the cell sampling chips 20, the first software protection modules 21 and the first hardware protection modules 22 in different battery packs may be same or different. For example, the battery pack 1 may contain 5 cell sampling chips, and the battery pack 2 may contain 8 cell sampling chips.

In some embodiments, the protection switch 10 may serve as an external switch used to control a connection and disconnection of the battery pack and electrical loads (for example, electrical devices). By disconnecting the protection switch 10 upon detection of abnormalities in the battery cell data, a probability of battery pack damage and occurrence of safety issues may be reduced.

In some embodiments, the control device 100 may be a computer or other devices. The embodiments of the present invention do not limit a specific device type of the control device 100.

In some embodiments, communication manners between the battery packs 1 to N and the control device 100 include but are not limited to RS-485 communication, Controller Area Network (CAN), and the like.

In some embodiments, the first software protection module 21 may include a first controller, and the second software protection module 11 may include a second controller. The first controller and the second controller are communicatively connected. For example, the first controller and the second controller may be Microcontroller Units (MCU). The first controller is communicatively connected to the cell sampling chip 20 for managing and controlling the battery pack. The second controller is electrically connected to the protection switch 10.

In some embodiments, during a process of implementing battery protection, for any battery pack in the battery packs 1 to N, the cell sampling chip 20 may acquire the cell data of any battery pack and send the cell data to the first software protection module 21 and the first hardware protection module 22 in any battery pack. When the cell data satisfies the first condition, the software protection is triggered. Specifically, the first software protection module 21 may generate a first protection instruction according to the cell data and send the first protection instruction to the second software protection module 11 in the control device. The second software protection module 11 controls the protection switch 10 to be disconnected in response to the first protection instruction. When the cell data satisfies a second condition, the hardware protection is triggered. Specifically, the first hardware protection module 22 acquires a first hardware protection signal and sends the first hardware protection signal to the second hardware protection module 12. The second hardware protection module 12 may control the protection switch 10 to be disconnected according to the first hardware protection signal. By controlling the protection switch 10 to be disconnected, a charging or discharging circuit of a battery group 200 where the battery pack is located may be cut off, so that a probability of battery pack damage and occurrence of safety issues is reduced. Through the hardware protection and the software protection, a dual protection for battery pack is achieved, and thus a stability and safety of an operation of the battery pack operation is improved.

In some embodiments, the cell data may include data such as temperature, voltage, current of a cell in a corresponding battery pack, and may further include signal data indicating abnormalities in voltage, temperature, and the like. The cell data satisfying the first condition or the cell data satisfying the second condition indicates that the cell data of the corresponding battery pack is abnormal (for example, over-voltage, over-temperature, and the like.).

In some embodiments, the first protection instruction indicates an instruction generated by the first software protection module 21 in the battery pack and used for executing protective measures (for example, disconnecting the protection switch 10) when an abnormality occurs in the cell data of the battery pack (for example, over-temperature, over-voltage, and the like).

In some embodiments, the first hardware protection signal indicates a signal obtained by the first hardware protection module 22 in battery pack for executing the protective measures when an abnormality occurs in the cell data of the battery pack (for example, over-temperature, over-voltage, and the like). The first hardware protection signal may be a binary signal, for example, when an abnormality occurs in the cell data of the battery pack, the first hardware protection signal may be a high-level signal (logic 1).

In some embodiments, the cell data may further include a hardware protection signal. The cell sampling chip 20 may generate the first hardware protection signal according to collected data such as voltage, temperature, and send the first hardware protection signal to the first hardware protection module 22.

In some embodiments of the present invention, if it is determined that the cell data is within a first threshold range, the first software protection module 21 determines that the cell data satisfies first condition.

In some embodiments, the cell data includes data such as voltage, temperature of the cell. Accordingly, a corresponding first threshold range may be respectively set according to a type of the cell data, for example, the first threshold range may include one or more of a first voltage range, a first temperature range, and the like. If the cell data is a voltage, the cell data being within the first threshold range indicates that the voltage is within the first voltage range; if the cell data is temperature, the cell data being within the first threshold range indicates that the temperature is within the first temperature range; if the cell data includes a plurality of parameters, for example, voltage and temperature, the cell data being within the first threshold range indicates that each parameter is within a corresponding first threshold range. A specific setting of the first threshold range are not limited in the embodiments of the present invention. The first voltage range and the first temperature range may be customized according to a performance of a corresponding battery pack and the like.

In some embodiments of the present invention, if it is determined that the cell data is within a second threshold range, the first software protection module 21 determines that the cell data satisfies the second condition.

In some embodiments, the second threshold range may include one or more of a second voltage range, a second temperature range, and the like. The cell data being within the second threshold range may include one or more of a voltage being within the second voltage range, a temperature being within the second temperature range, and the like. A specific setting of the second threshold range are not limited in the embodiments of the present invention. The second voltage range and the second temperature range may be customized according to a performance of a corresponding battery pack and the like.

In some embodiments, by setting the first condition and the second condition, a sequence of triggering the software protection and the hardware protection may be set. For example, if a priority of the software protection is set greater than that of the hardware protection, the software protection is executed first, the hardware protection is triggered if the software protection fails or malfunctions. Thus, a configuration may be as follows: the first condition is that a voltage is greater than the first voltage threshold, the second condition is that a voltage is greater than the second voltage threshold, and it is set that the first voltage threshold is less than the second voltage threshold, and/or it is designed that the first condition is that a temperature is greater than the first temperature threshold, the second condition is that a temperature is greater than the second temperature threshold, and it is set that the first temperature threshold is less than the second temperature threshold. Taking that the first condition is set as a voltage is greater than the first voltage threshold, the second condition is set as a voltage is greater than the second voltage threshold, and the first voltage threshold is set to be less than the second voltage threshold as an example, when a voltage of the battery cell is greater than the first voltage threshold, the software protection is triggered. Normally, after triggering the software protection, the voltage of the battery cell will decrease. However, if the voltage of the battery cell continues to rise after triggering the software protection, it indicates that the software protection may have failed or malfunctioned, and when the voltage continues to rise to be greater than the second voltage threshold, the hardware protection is triggered. In this way, by setting the priority of the software protection and the hardware protection, a protection method is first adopted to protect the battery pack when the cell data is abnormal, which can avoid resource waste and provide dual protection. If one protection method fails or malfunctions, another protection method may be promptly enabled to protect the battery pack, thereby improving the safety and stability of the operation of the battery pack.

In other embodiments, to further ensure safety, the first condition and second condition may be set to a same condition, so that when the cell data satisfies the first condition or the second condition, the software protection and the hardware protection are triggered simultaneously.

In some embodiments, the cell sampling chip 20 may determine whether a collected cell data satisfies the first condition or whether the collected cell data satisfies the second condition. When it is determined that the cell data satisfies the first condition, the cell data is determined to be abnormal and the abnormal cell data is sent to the first software protection module 21. The first software protection module 21 generates a first protection instruction according to the abnormal cell data and sends the first protection instruction to the second software protection module 11. The second software protection module 11 may control the protection switch 10 to be disconnected according to the first protection instruction.

In other embodiments, the cell sampling chip 20 may report the collected cell data to the first software protection module 21 in real time. The first software protection module 21 acquires the cell data and determines whether the cell data satisfies the first condition. When it is determined that the cell data satisfies the first condition, the first software protection module 21 determines that the cell data is abnormal and generates the first protection instruction according to the abnormal cell data.

In other embodiments, the first software protection module 21 may obtain the cell data and send the cell data to the second software protection module 11; the second software protection module 11 receives the cell data and determines whether the cell data satisfies the first condition. When it is determined that the cell data satisfies the first condition, a second protection command is generated and the protection switch 10 is controlled to be disconnected according to the second protection command.

In some embodiments, the cell sampling chip 20 may further generate a first hardware protection signal and send the first hardware protection signal to the first hardware protection module 22 when it is determined that the cell data satisfies the second condition.

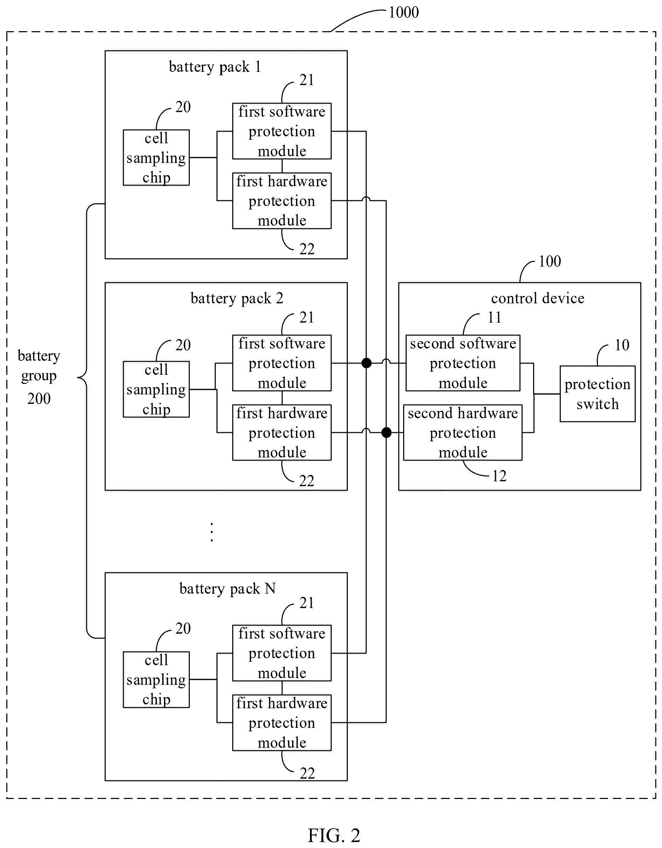

Please refer to Fig. 2, which shows a system architecture diagram of a battery protection system 1000 according to another embodiment of the present invention. As shown in Fig. 2, the first software protection module 21 is electrically connected to the first hardware protection module 22.

In some embodiments, if an electrical connection between the first software protection module 21 and the cell sampling chip 20 fails, the first software protection module 21 may not acquire the cell data, thus failing to achieve a software protection, which may affect the protection success rate of battery pack, leading to an increased probability of battery pack damage and occurrence of safety issues.

To solve above problems, in the embodiments of the present invention, based on the electrical connection between the first software protection module 21 and the first hardware protection module 22, the first hardware protection module 22 may transmit a first hardware protection signal to the first software protection module 21; the first software protection module 21 generates a first protection instruction according to the first hardware protection signal and sends the first protection instruction to the second software protection module 11. The second software protection module 11 controls the protection switch 10 to be disconnected in response to the first protection instruction. In this embodiment, by adding redundant circuits to software protection, the probability of battery pack damage and occurrence of safety issues can be reduced, and a safety and stability of an operation of the battery pack can be improved.

In some embodiments, if the electrical connection between the first hardware protection module 22 and the cell sampling chip 20 fails, it may cause the first hardware protection module 22 to fail to obtain the first hardware protection signal, which may affect the protection success rate of the battery pack, leading to an increased probability of battery pack damage and occurrence of safety issues.

To solve the above problem, when it is determined that the cell data satisfies the second condition, the first software protection module 21 may generate a second hardware protection signal according to the cell data and send the second hardware protection signal to the first hardware protection module 22. The first hardware protection module 22 receives the second hardware protection signal and sends the second hardware protection signal to the second hardware protection module 12. The second hardware protection module 12 may control the protection switch 10 to be disconnected according to the second hardware protection signal. In this embodiment, by adding redundant circuits to obtain the hardware protection signal, the probability of battery pack damage and occurrence of safety issues can be reduced, and the safety and stability of the operation of the battery pack can be improved.

In other embodiments, the cell sampling chip 20 may also send the first hardware protection signal to the first software protection module 21. The first software protection module 21 sends the first hardware protection signal to the first hardware protection module 22, thereby avoiding a situation where the electrical connection between the first hardware protection module 22 and the cell sampling chip 20 fails, causing the first hardware protection module 22 to fail to obtain the first hardware protection signal and affecting a success rate of battery protection.

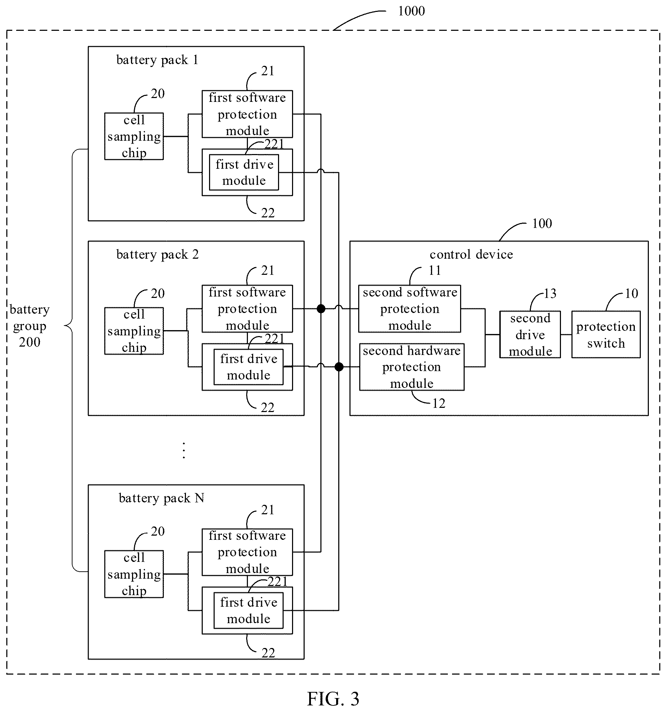

Please refer to Fig. 3, which is a schematic diagram of a system architecture of a battery protection system 1000 according to still another embodiment of the present invention. As shown in Fig. 3, the first hardware protection module 22 includes a first drive module, the first software protection module 21 is electrically connected to the first drive module, and the first drive module is electrically connected to the second hardware protection module 12.

In some embodiments of the present invention, the first drive module determines a target hardware protection signal according to the first hardware protection signal and the second hardware protection signal, and sends the target hardware protection signal to the second hardware protection module 12; the second hardware protection module 12 controls the protection switch 10 to be disconnected according to the target hardware protection signal.

In some embodiments, the first drive module may include a logical OR gate, and the first hardware protection signal and the second hardware protection signal output the target hardware protection signal through the logical OR gate. For example, assuming that the cell data is abnormal (for example, the cell data satisfies the second condition), both the first hardware protection signal and the second hardware protection signal are set to a high level (for example, set to logic 1). When either the first hardware signal or the second hardware signal is a high-level signal, or both the first hardware signal and the second hardware signal are high-level signals, the target hardware protection signal is also a high-level signal. The present invention embodiment does not limit the first drive module.

As shown in Fig. 3, in some embodiments of the present invention, the control device may further include a second drive module 13, an output end of the second software protection module 11 and an output end of the second hardware protection module 12 are both electrically connected to an input end of the second drive module 13, and the output end of the second drive module 13 is electrically connected to the protection switch 10 to control the protection switch 10 to be disconnected.

In some embodiments, the second drive module 13 may include a logical AND gate, and a signal output by the second software protection module 11 and a signal output by the second hardware protection module 12 may be input into the logical AND gate to output a target control signal. For example, assuming that the target control signal is set to a high level (for example, logic 1) to control the protection switch 10 to be closed. When the target control signal is set to a low level (for example, logic 0), the protection switch 10 is controlled to be disconnected. Then, when either the signal output by the second software protection module 11 or the signal output by the second hardware protection module 12 is a low-level signal, or both are low-level signals, the target control signal is a low-level signal, which can control the protection switch 10 to be disconnected. In this case, if a first protection instruction detects an abnormality in the cell data, the second software protection module 11 may output a low-level signal. If an abnormality in the cell data is detected according to a received hardware protection signal (a first hardware protection signal, a second hardware protection signal, or a target hardware protection signal), the second hardware protection module 12 may output a low-level signal. The embodiments of the present invention do not limit the second drive module 13.

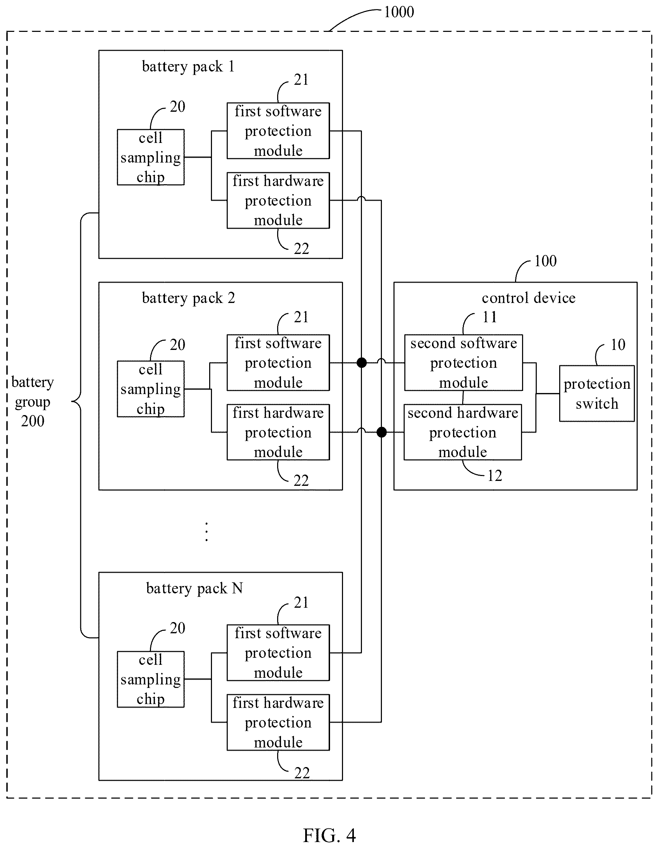

Please refer to Fig. 4, which is a schematic diagram of a system architecture of a battery protection system 1000 according to yet another embodiment of the present invention. As shown in Fig. 4, the second software protection module 11 and the second hardware protection module 12 can be electrically connected.

In some embodiments, if there is a fault in an electrical connection between the second hardware protection module 12 and the protection switch 10, it may cause the second hardware protection module 12 to fail to control the protection switch 10 to be disconnected, which may affect a protection success rate of a battery pack, increasing a probability of battery pack damage and occurrence of safety issues.

To solve the above problem, the embodiments of the present invention add an electrical connection between the second software protection module 11 and the second hardware protection module 12. The second hardware protection module 12 may send a first hardware protection signal to the second software protection module 11; the second software protection module 11 receives the first hardware protection signal and controls the protection switch 10 to be disconnected according to the first hardware protection signal, thereby improving the protection success rate of the battery pack and reducing the probability of battery pack damage and occurrence of safety issues.

In other embodiments, the first hardware protection module 22 may further include a signal processing module for processing the hardware protection signal sent from the first hardware protection module 22 to improve anti-interference performance of a transmitted signal. The second hardware protection module 12 may further include a received signal processing module for processing the hardware protection signal received by the second hardware protection module 12, such as performing signal conversion to convert a high-level signal to a low-level signal or the like.

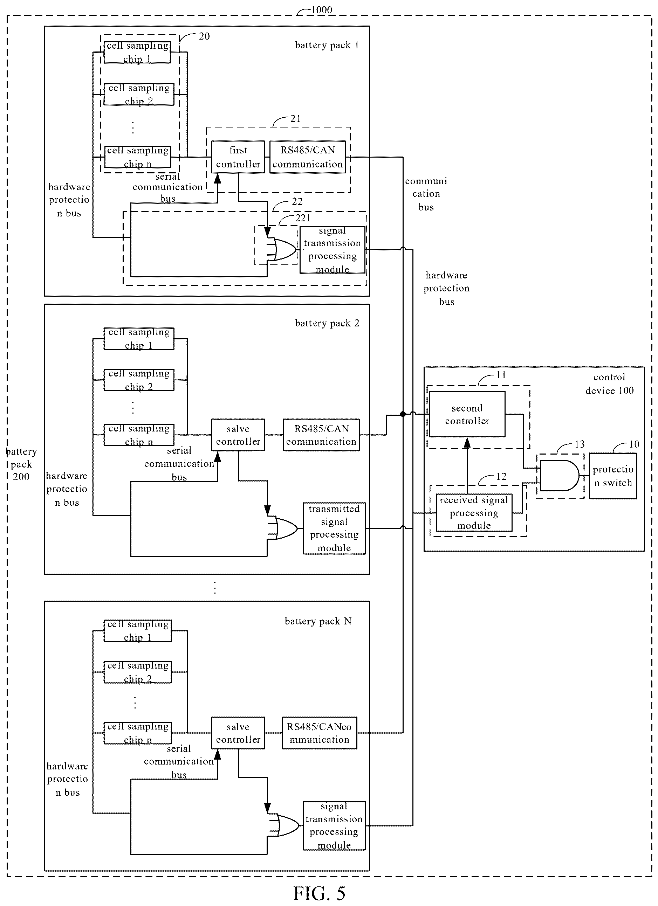

Please refer to Fig. 5, which is an example diagram of a system architecture of a battery protection system 1000 according to embodiments of the present invention. As shown in Fig. 5, the battery protection system 1000 includes a control device 100 and a battery group 200. The battery group 200 includes battery packs 1 to N, where N is an integer greater than 1. Each battery pack in the battery packs 1 to N includes a cell sampling chip 20, a first software protection module 21, and a first hardware protection module 22. The first software protection module 21 and the first hardware protection module 22 are electrically connected. The first software protection module 21 and the cell sampling chip 20 are electrically connected through serial communication bus. The first hardware protection module 22 and the cell sampling chip 20 are electrically connected through a hardware protection bus. The control device 100 includes a protection switch 10, a second software protection module 11, a second hardware protection module 12, and a second drive module 13. The second software protection module 11 and the second hardware protection module 12 are electrically connected. The second software protection module 11 and the second hardware protection module 12 are both electrically connected to the second drive module 13, and the second drive module 13 is electrically connected to the protection switch 10. The first software protection module 21 and the second software protection module 11 are communicatively connected through communication bus, and the first hardware protection module 22 and the second hardware protection module 12 are electrically connected through the hardware protection bus.

In some embodiments, serial communication bus may be any one of I2C bus, SPI bus, and the like. The communication bus may be serial communication bus. A communication manner between the first software protection module 21 and the second software protection module 11 may include but is not limited to RS-485 communication, Controller Area Network (CAN) communication, and the like.

As shown in Fig. 5, the cell sampling chip 20 in the battery packs 1 to N is a cell sampling chip collection composed of cell sampling chips 1 to n, where n is an integer greater than 1. The first software protection module 21 includes a first controller and a communication module. The first hardware protection module 22 includes a first drive module 221 and a transmitted signal processing module. The second software protection module 11 includes a second controller. The second hardware protection module 12 includes a received signal processing module.

In some embodiments, the communication module may be a communication module based on the RS-485 communication protocol, a communication module based on the CAN communication protocol, or the like. The communication module is configured to perform signal processing on the signals generated or transmitted by the first controller, such as signal conversion, error detection, and the like.

In some embodiments, during a process of the control device 100 communicating with the battery pack 1 to N to achieve protection for the battery pack 1 to N, the control device 100 may act as a master device, and battery pack as a slave device. The first controller in the battery pack and the second controller in the control device may communicate based on a serial communication protocol (for example, RS-485 communication protocol, CAN communication protocol).

In some embodiments, the cell sampling chip 20 may send the cell data to the first controller, which monitors whether the cell data is abnormal, or when an abnormality in the cell data is detected (for example, a telecommunication output satisfies a first condition), it may send the abnormal cell data to the first controller. The first controller generates a first protection instruction according to the abnormal the cell data. The communication module may send the first protection instruction to the second controller. The second controller controls the protection switch 10 to be disconnected according to the first protection instruction.

In some embodiments, to prevent potential battery pack damage or safety risks caused by an increased power resulting from a software protection failure, when an abnormality in the cell data is detected (for example, the cell data satisfies a second condition), the cell sampling chip 20 may generate a first hardware protection signal. The cell sampling chip 20 may output the first hardware protection signal to the first hardware protection module 22, or send the first hardware protection signal to the first controller. The first controller obtains the first hardware protection signal and may send the first hardware protection signal to the first hardware protection module 22. The first drive module 221 may generate a target hardware protection signal according to the hardware protection signal sent by the first controller and the hardware protection signal sent by the cell sampling chip 20. The target hardware protection signal is sent to the second hardware protection module 12 through the transmitted signal processing module.

In some embodiments, the first controller may further generate a second hardware protection signal according to the cell data. The first drive module 221 may generate the target hardware protection signal according to the hardware protection signal sent by the first controller and the hardware protection signal sent by the cell sampling chip 20. The target hardware protection signal is sent to the second hardware protection module 12 through the transmitted signal processing module.

In some embodiments, the second hardware protection module 12 receives the hardware protection signal through the received signal processing module and may control the protection switch 10 to be disconnected according to the hardware protection signal.

In some embodiments, the received signal processing module may further send the hardware protection signal to a main controller, which controls the protection switch 10 to be disconnected according to the hardware protection signal.

In some embodiments, the second drive module 13 may determine a target control signal according to the signal output by the main controller and the signal sent by the received signal processing module, and control an on/off of the protection switch 10 according to the target control signal.

In a battery protection system provided by the embodiments of the present invention, the battery protection system includes a control device and battery back(s), the battery pack includes a cell sampling chip, a first software protection module, and a first hardware protection module, and the control device includes a protection switch, a second software protection module, and a second hardware protection module. The first software protection module and the second software protection module are communicatively connected, and the first hardware protection module and the second hardware protection module are electrically connected. In a process of implementing battery protection, the cell sampling chip acquires cell data and sends the cell data to the first software protection module and the first hardware protection module. In a case that the cell data satisfies a first condition, the first software protection module generates a first protection instruction according to the cell data and sends the first protection instruction to the second software protection module. The second software protection module controls the protection switch to be disconnected in response to the first protection instruction, thereby protecting the battery pack through the software protection. Considering that the first software protection module or the second software protection module may cause a software protection to fail due to a fault, affecting a safety and reliability of the battery pack, the battery protection system provided by the embodiments of the present invention adds a manner of hardware protection on a basis of the software protection. In a case that the cell data satisfies the second condition, the first hardware protection module obtains a first hardware protection signal and sends the first hardware protection signal to the second hardware protection module. The second hardware protection module controls the protection switch to be disconnected according to the first hardware protection signal. Through the hardware protection and the software protection, a dual protection of the battery pack is achieved and a safety and reliability of an operation of the battery pack is improved.

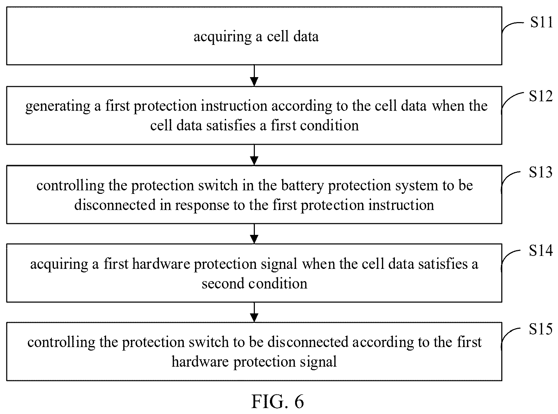

Please refer to Fig. 6, which shows an implementation flowchart of a battery protection method according to embodiments of the present invention. This method is applied to the battery protection system, and the embodiments of the present invention are described by using an example in which the method is applied to the battery protection system 1000 in Fig. 1. The method includes following steps.

S11: acquiring a cell data.

S12: generating a first protection instruction according to the cell data when the cell data satisfies a first condition.

S13: controlling the protection switch in the battery protection system to be disconnected in response to the first protection instruction.

S14: acquiring a first hardware protection signal when the cell data satisfies a second condition.

S15: controlling the protection switch to be disconnected according to the first hardware protection signal.

In the battery protection method provided by the embodiments of the present invention, a dual protection of the battery pack is achieved through a hardware protection and a software protection and thus a safety and reliability of an operation of the battery pack is improved.

In some embodiments, an implementation of the battery protection method may refer to a description of the battery protection system provided in Figs. 1 to 5 and corresponding embodiments.

It should be understood that a size of sequence numbers in the above embodiments does not imply an execution order. The execution order of each process should be determined by its function and internal logic, and should not impose any limitation on the implementation process of the embodiments of the present invention.

Finally, it should be noted that the above embodiments are only used to illustrate the technical solutions of the present invention and not to limit them. Although the invention has been described in detail with reference to the preferred embodiments, those skilled in the art should understand that they can modify or equivalently replace the technical solutions of the present invention without departing from the spirit and scope of the technical solutions of the present invention.

## Claims

1. A battery protection system (1000), comprising: a control device (100) and battery pack(s), wherein the battery pack comprises a cell sampling chip (20), a first software protection module (21) and a first hardware protection module (22), the first software protection module (21) and the first hardware protection module (22) are both electrically connected to the cell sampling chip (20), the control device (100) comprises a protection switch (10), a second software protection module (11) and a second hardware protection module (12), the second software protection module (11) and the second hardware protection module (12) are both electrically connected to the protection switch (10), the first software protection module (21) and the second software protection module (11) are communicatively connected, and the first hardware protection module (22) and the second hardware protection module (12) are electrically connected, wherein
the cell sampling chip (20) acquires cell data, and sends the cell data to the first software protection module (21) and the first hardware protection module (22);
when the cell data satisfies a first condition, the first software protection module (21) generates a first protection instruction according to the cell data and sends the first protection instruction to the second software protection module (11);
the second software protection module (11) controls the protection switch (10) to be disconnected in response to the first protection instruction;
when the cell data satisfies a second condition, the first hardware protection module (22) acquires a first hardware protection signal, and sends the first hardware protection signal to the second hardware protection module (12); and
the second hardware protection module (12) controls the protection switch (10) to be disconnected according to the first hardware protection signal.

2. The battery protection system (1000) according to claim 1, wherein the first software protection module (21) and the first hardware protection module (22) are electrically connected;
the first hardware protection module (22) transmits the first hardware protection signal to the first software protection module (21); and
the first software protection module (21) generates the first protection instruction according to the first hardware protection signal.

3. The battery protection system (1000) according to claim 1 or 2, wherein
when it is determined that the cell data satisfies the second condition, the first software protection module (21) generates a second hardware protection signal according to the cell data, and sends the second hardware protection signal to the first hardware protection module (22).

4. The battery protection system (1000) according to claim 3, wherein the first hardware protection module (22) comprises a first drive module, the first software protection module (21) and the first drive module are electrically connected;
the first drive module determines a target hardware protection signal according to the first hardware protection signal and the second hardware protection signal, and sends the target hardware protection signal to the second hardware protection module (12); and
the second hardware protection module (12) controls the protection switch (10) to be disconnected according to the target hardware protection signal.

5. The battery protection system (1000) according to any one of claims 1 to 4, wherein the second software protection module (11) and the second hardware protection module (12) are electrically connected;
the second hardware protection module (12) sends the first hardware protection signal to the second software protection module (11); and
the second software protection module (11) receives the first hardware protection signal and controls the protection switch (10) to be disconnected according to the first hardware protection signal.

6. The battery protection system (1000) according to claim 5, wherein the control device (100) further comprises a second drive module (13), an output end of the second software protection module (11) and an output end of the second hardware protection module (12) are both electrically connected to an input end of the second drive module (13), and an output end of the second drive module (13) is electrically connected to the protection switch (10) to control the protection switch (10) to be disconnected.

7. The battery protection system (1000) according to claim 2, wherein:
if it is determined that the cell data is within a first threshold range, the first software protection module (21) determines that the cell data satisfies the first condition.

8. The battery protection system (1000) according to claim 7, wherein:
if it is determined that the cell data is within a second threshold range, the first software protection module (21) determines that the cell data satisfies the second condition.

9. The battery protection system (1000) according to any one of claims 1 to 8, wherein:
the first software protection module (21) sends the cell data to the second software protection module (11); and
the second software protection module (11) receives the cell data, and when it is determined that the cell data satisfies the first condition, generates a second protection command and controls the protection switch (10) to be disconnected according to the second protection command.

10. A battery protection method, wherein the battery protection method uses the battery protection system (1000) according to any one of claims 1 to 9 to protect the battery pack in the battery protection system (1000), and the battery protection method comprises:
acquiring a cell data;
generating a first protection instruction according to the cell data when the cell data satisfies a first condition;
controlling the protection switch (10) in the battery protection system (1000) to be disconnected in response to the first protection instruction;
acquiring a first hardware protection signal when the cell data satisfies a second condition; and
controlling the protection switch (10) to be disconnected according to the first hardware protection signal.

11. The battery protection method according to claims 10, wherein the battery protection method further comprises:
in a case that the cell data is within a first threshold range, determining that the cell data satisfies the first condition.

12. The battery protection method according to claims 10 or 11, wherein the battery protection method further comprises:
in a case that the cell data is within a second threshold range, determining that the cell data satisfies the second condition.

13. The battery protection method according to any one of claims 10 to 12, wherein the first software protection module (21) and the first hardware protection module (22) are electrically connected, and the battery protection method comprises:
transmitting, by the first hardware protection module (22), the first hardware protection signal to the first software protection module (21); and
generating, by the first software protection module (21) based on the first hardware protection signal, the first protection instruction.

14. The battery protection method according to any one of claims 10 to 13, wherein the battery protection method further comprises:
in a case that the cell data satisfies the second condition, generating, by the first software protection module (21) based on the cell data, a second hardware protection signal;
transmitting, by the first software protection module (21), the second hardware protection signal to the first hardware protection module (22).

15. The battery protection method according to claim14, wherein the first hardware protection module (22) comprises a first drive module, the first software protection module (21) and the first drive module are electrically connected, the battery protection method comprises:
determining, by the first drive module based on the first hardware protection signal and the second hardware protection signal, a target hardware protection signal;
transmitting, by the first drive module, the target hardware protection signal to the second hardware protection module (12); and
controlling, by the second hardware protection module (12) based on the target hardware protection signal, the protection switch (10) to be disconnected.
